# EUROPÄISCHE PATENTSCHRIFT

(11) **EP 1 879 768 B1**
(45) Veröffentlichungstag und Bekanntmachung des Hinweises auf die Patenterteilung: **12.09.2012**
(21) Anmeldenummer: 06742678.3
(22) Anmeldetag: 25.04.2006
(51) Int. Cl.: B60L 3/00

(54) **VERFAHREN ZUM AKTIVIEREN EINES RANGIERMODUS EINES KRAFTFAHRZEUGES**
METHOD FOR ACTIVATING A MANOEUVRING MODE OF A MOTOR VEHICLE
PROCEDE POUR ACTIVER UN MODE MANOEUVRE D'UN VEHICULE AUTOMOBILE

(30) Priorität: 10.05.2005 DE 102005021414
(43) Veröffentlichungstag der Anmeldung: 23.01.2008
(73) Patentinhaber: ZF FRIEDRICHSHAFEN Aktiengesellschaft, 88038 Friedrichshafen (DE)
(72) Erfinder: WINKEL, Matthias, 88250 Weingarten (DE); CORDT, Ramon, 88046 Friedrichshafen (DE)
(86) Internationale Anmeldenummer: PCT/EP2006/003799
(87) Internationale Veröffentlichungsnummer: WO 2006/119865

(56) Entgegenhaltungen:
- EP-A- 0 300 233
- EP-A- 1 359 336
- DE-A1- 10 016 582
- DE-A1- 10 223 464

## Beschreibung

Die Erfindung betrifft ein Verfahren zum Aktivieren eines Rangiermodus eines Kraftfahrzeuges, vorzugsweise eines Nutzfahrzeuges, wie beispielsweise Lastkraftwagen, Baustellenfahrzeugen oder Busse, mit einem automatischen oder automatisierten Getriebe und mit einer automatisierten Kupplung gemäß dem Oberbegriff des Patentanspruchs 1.

Beispielsweise von schweren Fahrzeugen ist es bekannt, dass bei diesen neben dem Getriebe auch das in der Regel als trockene Reibkupplung ausgelegte Anfahrelement automatisiert betätigbar ist. Das von dem Anfahrelement zu übertragende Drehmoment wird dabei mit Hilfe eines Aktuators durch Variation der Anpresskraft an einer Kupplungsdruckplatte eingestellt.

Solchen Kupplungen werden in zwei Betriebssituationen des Fahrzeugs unterschiedlich betrieben, zu denen einerseits das Anfahren und andererseits das Rangieren des Fahrzeugs gehören. Das Anfahren kennzeichnet den Übergang vom Fahrzeugstillstand bis zum vollständigen Schließen der Kupplung. Im Unterschied dazu wird die Kupplung beim Rangieren nicht vollständig geschlossen. Während beim Rangieren die Drehzahl der Antriebsmaschine in der Regel knapp oberhalb einer Leelaufdrehzahl gehalten wird, erfolgt die Einstellung der Rangiergeschwindigkeit über eine Regelung des Kupplungsstellweges mittels des oben genannten Aktuators. Das Rangiermanöver erfolgt daher schlupfgesteuert.

Des Weiteren ist bekannt, dass bei vollautomatisierten Getrieben die Kupplungsbetätigung und das Motordrehmoment üblicherweise nur über das Fahr- bzw. Gaspedal beeinflusst werden können. Dieses hat zur Folge, dass der für ein Rangiermanöver zur Verfügung stehende Fahrpedalstellweg begrenzt ist, denn in der dann üblicherweise niedrigsten Vorwärts- oder Rückwärtsfahrstufe muss über diesen Stellweg auch noch eine Fahrgeschwindigkeitszunahme nach dem Schließen der Kupplung, also nach dem Anfahren realisiert werden.

Um dem Fahrer hierbei eine Hilfestellung zu geben, ist es bereits bekannt, im untersten Fahrgang eine Rangierfunktion derart zu applizieren, dass der Anfahrvorgang erst nach Erreichen von beispielsweise 75 % des Fahrpedalstellweges beginnt. Nachteilig hierbei ist es, dass dann ebenfalls nur noch ein vergleichsweise kleiner Stellweg für den Anfahrvorgang übrig bleibt, und dass solche Funktionen oft nicht ohne weiteres für den Fahrer zu erkennen sind.

Aus der DE 100 16 582 A1 sind bereits verschiedenartige Ausgestaltungen von Betätigungselementen bekannt, mit welchen ein Kriechvorgang auslösbar ist. Beispielsweise kann dieses Betätigungselement als manuell zu betätigender Drehschalter ausgebildet sein, welcher zusätzlich zu den üblichen Stellungen für die Fahrstufen des automatischen Getriebes zwei weitere Stellungen dauerhaft einnehmen kann, in denen entweder bei Vorwärtsfahrt oder bei Rückwärtsfahrt der Kriechmodus eingeschaltet wird. In einer anderen Variante wird vorgeschlagen, als Betätigungselement einen nur schematisch gezeigten und nicht näher beschriebenen Schalter zu verwenden. Aus der EP0300233 ist ein Verfahren bekannt mit allen Merkmalen des Oberbegriffs des Anspruchs 1.

Der Erfindung liegt vor diesem Hintergrund die Aufgabe zugrunde, ein Verfahren zum Aktivieren eines Rangiermodus anzugeben, das die oben genannten Nachteile vermeidet und dem Fahrer somit eine eindeutige Rückmeldung über den Fahrzustand gibt, sowie eine Einschränkung des Fahrpedalstellweges vermeidet.

Diese Aufgaben werden gelöst durch Verfahren gemäß den Merkmalen des unabhängigen Patentanspruchs 1. Vorteilhafte Ausgestaltungen dieses Verfahrens sind in den abhängigen Ansprüchen angegeben.

Bei einem Verfahren zum Aktivieren eines Rangiermodus eines Kraftfahrzeuges, vorzugsweise eines Nutzfahrzeuges, beispielsweise von Lastkraftwagen, Baustellenfahrzeugen oder Bussen, mit einem Automatgetriebe, also einem automatischen oder einem automatisierten Getriebe, einer automatisierten Kupplung, einem Fahrpedal, einem Betätigungselement zur Aktivierung eines Rangiermodus, einem Getriebewählhebel zur Auswahl des Getriebefahrbereiches und/oder einzelner Gangstufen sowie mit einer Steuereinrichtung erfolgt die Aktivierung des Rangiermodus gemäß der Erfindung durch Betätigung des Betätigungselementes derart, dass dieses nach der Betätigung in seine ursprüngliche Lage zurückkehrt.

Dieses ist mit dem Vorteil verbunden, dass dem Fahrer nach positiv erfolgter Aktivierung dieses beispielsweise optisch angezeigt werden kann, während das Betätigungselement wieder in seine Ausgangslage zurückkehrt. Unbestimmte Betätigungszustände, wie sie etwa der genannte Stand der Technik zulässt, in dem dort ein Schalter eindeutig in eine den Rangiermodus wählende Position gebracht wird, tatsächlich dieser Modus aber momentan unzulässig ist und von der Steuereinrichtung ignoriert wird, können so vermieden werden. Darüber hinaus steht dem Fahrer bei aktiviertem Rangiermodus der volle Fahrpedalweg zur Verfügung.

Das Betätigungselement kann verschiedenartig ausgebildet sein. Entscheidend ist sein tasterartiger Charakter beziehungsweise seine tasterartige Wirkungsweise, wegen der dieser nach einmaliger Betätigung in eine Betätigungsrichtung wieder in seine Ausgangslage zurückkehrt.

Für eine eindeutige Funktionszuordnung kann das Betätigungselement zur Aktivierung eines Rangiermodus bevorzugt als separater Taster ausgebildet sein. Das Niederdrücken dieses Tasters übermittelt einen diesbezüglichen Fahrerwunsch an die Steuereinrichtung, die daraufhin prüft, ob dieser Rangiermodus in der derzeitigen Fahrzeugbetriebssituation überhaupt zulässig ist. Die Steuereinrichtung unterdrückt das Aktivieren dabei vorzugsweise den Rangiermodus in Abhängigkeit von Zustandsdaten des Fahrzeugs und/oder dessen Umgebung. Die Aktivierung wird beispielsweise nicht zugelassen, wenn die aktuelle Kupplungslast bzw. Kupplungstemperatur und/oder Fahrgeschwindigkeit vorgegebene Grenzwerte überschreiten.

Bei positivem Prüfungsergebnis hinsichtlich dieser Zustandsdaten erfolgt bevorzugt eine optische Rückmeldung an den Fahrer, beispielsweise als separate Leuchtanzeige oder integriert in das vorhandene Fahrerdisplay. Alternativ oder zusätzlich dazu kann es bevorzugt sein, eine akustische Rückmeldung zu geben.

Ergibt die Prüfung eine momentane Unzulässigkeit des Rangiermodus, so erfolgt keine Rückmeldung an den Fahrer oder es wird eine speziell für diesen Fall ausgelegte, negative Rückmeldung ausgegeben, die gegebenenfalls auch aus einer Kombination von optischer und akustischer Warnung bestehen kann.

Das Zurückkehren des Betätigungselementes in seine Ausgangslage lässt in jedem Fall, vorzugsweise nach einem vorherigen Ablehnen des Rangiermodus-Wunsches durch die Steuereinrichtung, unmittelbar danach einen erneuten Versuch des Fahrers zu, den Rangiermodus einzuschalten.

Gemäß einer weiteren Ausgestaltung der Erfindung kann es sinnvoll sein, ein bereits vorhandenes Betätigungsbauteil zusätzlich mit der Funktion des den Rangiermodus aktivierenden Betätigungselementes zu versehen. Vorzugsweise ist dies ein für die Getriebefahrbereichsvorwahl oder Gangvorwahl vorhandener Getriebewählhebel. Mittels diesem ist, wenn sich das Getriebe in der niedrigsten Gangstufe (Vorwärtsgang oder Rückwärtsgang) befindet, durch nochmaliges Signalisieren eines Rückschaltungswunsches mittels des Getriebewählhebels der Rangiermodus aktivierbar. Nach dessen Betätigung kehrt der Getriebewählhebel wieder in seine ursprüngliche Lage zurück. Das erfolgreiche Aktivieren des Rangiermodus wird dem Fahrer wie oben beschrieben rückgemeldet.

Entsprechend einer weiteren Variante kann vorgesehen sein, dass eine zuvor gewählte Getriebeübersetzung, die höher als der niedrigste Vorwärts- oder Rückwärtsgang ist, durch eine Aktivierung des Rangiermodus automatisch so angepasst wird, dass das Fahrzeug fahrsituationsgerecht rangiert werden kann.

Eine andere Weiterbildung des Verfahrens sieht vor, dass ein Wechsel der Fahrtrichtung, signalisiert beispielsweise durch einen Wechsel der Stellung des Getriebewählhebels (Vorwärtsfahrstellung oder Rückwärtsfahrstellung), den Rangiermode nicht beendet. Durch diese Verfahrenseinstellung ist es möglich, durch kurzzeitiges Vorwärtsfahren und Rückwärtsfahren des Fahrzeugs dieses beispielsweise aus einem tiefen Fahrbahnschlagloch oder eine Schneeanhäufung vor und hinter den Fahrzeugrädern herauszuschaukeln.

Gemäß einer weiteren Variante kann vorgesehen sein, dass ein Wechsel des Getriebegangs bei gleicher Fahrtrichtung, signalisiert beispielsweise durch eine Betätigung des Getriebewählhebels, den Rangiermode nicht beendet. So kann beispielsweise ohne den Rangiermode zu verlassen von einem ersten Rückwärtsgang in einen zweiten Rückwärtsgang oder von einem ersten Vorwärtsgang in einen dritten dem Rangiermode zugeordneten Vorwärtsgang geschaltet werden. Eine Beendigung des Rangiermodus würde erst dann erfolgen, wenn wenigstens eine zusätzliche, weiter unten genannte Bedingung erfüllt wäre.

Eine Steuereinrichtung eines verfahrensgemäß betriebenen Fahrzeuges kann aber auch so arbeiten, dass ausgehend von einem Rangiermode ein Wechsel in einen dem Rangiermode nicht zugeordneten Getriebegang den Rangiermode nicht beendet. So ist es beispielsweise möglich, dass ein Fahrzeug auch dann noch für einen vorbestimmte Zeitraum im Rangiermode verbleibt, wenn ein Nutzfahrzeug in einer Rangiersituation auf einem Betriebshof kurzzeitig, etwa mit dem fünften Vorwärtsgang, vergleichsweise schnell ein kurzes Stück vorgezogen wird, um anschließend mit sehr geringer Geschwindigkeit wieder rückwärts rangiert zu werden.

Es ist auch sinnvoll, wenn der Rangiermodus auch dann mit Erfolg angefordert werden kann, wenn sich das Automatgetriebe in seiner Neutral-Stellung befindet. Eine solche Situation kann beispielsweise dann auftreten, wenn ein Lastkraftwagen an einer unübersichtlichen Belade- oder Entladestelle abgestellt ist. Eine erneute Inbetriebnahme des Fahrzeugs geht von der Neutralstellung des Automatgetriebes aus. Wenn der Fahrer bei dieser Inbetriebnahme erkennt, dass er das Fahrzeug aus seiner Abstellposition herausrangieren muss, so wird dieser ausgehend von dieser Neutral-Stellung des Getriebes erfolgreich den Rangiermodus anwählen.

Es kann aber auch sinnvoll sein, wenn der Rangiermode in der Neutral-Stellung des Automatgetriebes nach Ablauf eines vorbestimmten Zeitraumes aufgehoben wird. Dadurch wird vorteilhaft erreicht, dass der Fahrer diesen Rangiermodus nicht auch dann manuell deaktivieren muss, wenn der Rangiervorgang an sich beendet ist, der Fahrer den Fahrzeugmotor bei einer Neutral-Stellung des Getriebes noch weiter laufen lassen möchte.

Weitere Vorteile und Merkmale der Erfindung ergeben sich aus dem nachfolgend anhand einer einzigen schematischen Zeichnungsfigur näher erläuterten Ausführungsbeispiel.

Ein insgesamt mit 2 bezeichnetes Kraftfahrzeug weist eine Antriebsmaschine 4, eine automatisierte Kupplung 6, ein Automatgetriebe 8 und eine angetriebene Achse 10 für Fahrzeugräder auf. Vom Fahrer bedienbar sind ein Fahrpedal 12 und ein Getriebewählhebel 14, welche beide mit einer elektronischen Steuereinrichtung 16 verbunden sind. Diese Steuereinrichtung 16 wirkt unter anderem mit einer Kupplungsbetätigungsvorrichtung 26 an der Kupplung 6, einer Getriebestelleinrichtung 18 und der Antriebsmaschine 4 bzw. dessen hier nicht dargestelltes Steuergerät zusammen. Die Steuereinrichtung 16 ist weiterhin mit einem als manuell zu betätigenden Taster 20 ausgebildeten Betätigungselement zur Aktivierung eines Rangiermodus verbunden.

Im Betrieb des Kraftfahrzeuges 2 wählt der Fahrer mittels des Getriebewählhebels 14 den gewünschten Getriebefahrbereich oder den gewünschten Getriebegang aus. Hierzu gehören mehrere Vorwärtsgänge und beispielsweise mehrere Rückwärtsgänge.

Soll nun mit dem Kraftfahrzeug 2 rangiert werden, so wird vom Fahrer zunächst in Abhängigkeit der gewünschten Fahrzeugbewegungsrichtung die gewünschte Vorwärts- oder Rückwärtsfahrstufe bzw. einen konkreten Getriebegang angewählt. Zur Aktivierung des Rangiermodus wird nun der Taster 20 niedergedrückt und somit der Steuereinrichtung 16 diese Anforderung des Rangiermodus übermittelt. Der Taster 20 kehrt nach seinem Niederdrücken in seine Ausgangslage zurück.

Die Steuereinrichtung 16 prüft parallel dazu, ob der Rangiermodus momentan zulässig ist, zum Beispiel durch Überprüfung der aktuellen Kupplungslast bzw. Kupplungstemperatur und/oder Fahrgeschwindigkeit, und gibt bei positivem Prüfungsergebnis den Rangiermodus frei. Dieses wird dem Fahrer durch eine dementsprechende optische Anzeige 22 signalisiert.

Die durch den Getriebewählhebel bzw. die Steuereinrichtung eingestellte Getriebeübersetzung kann durch Aktivierung des Rangiermodus über den Taster 20 korrigiert werden.

Die Steuereinrichtung 16 versetzt nun das Gesamtsystem in den Zustand "Rangieren. Dementsprechend steht dem Fahrer vorteilhaft der gesamte Fahrpedalweg für das Rangieren zur Verfügung. Die Anzeige 22 erlischt beim Übergang in den Anfahrmodus.
Hat die Steuereinrichtung 16 bei Betätigung des Tasters 20 Unplausibilitäten festgestellt und daher auf eine Unzulässigkeit des Rangiermodus erkannt, erfolgt keine optische Anzeige 22. Dadurch hat der Fahrer eine eindeutige Rückmeldung darüber, dass sich das Fahrzeug nicht im gewünschten Rangiermodus befindet. Betätigt er nun das Fahrpedal 12, erfolgt ein Anfahren des Kraftfahrzeugs. Dieses Verhalten des Fahrzeugs war in diesem Moment für ihn vorhersehbar, so dass der Fahrer durch dieses Fahrzeugverhalten nicht überrascht sein kann.

Alternativ zur vorbeschriebenen Anordnung eines separaten Tasters 20 kann die Funktion des Aktivierens des Rangiermodus auch in den Getriebewählhebel 14 für die Fahrstufenwahl und/oder Gangwahl integriert sein. Analog zur Ausführungsform mit dem Taster 20 erfolgt eine Plausibilitätsprüfung mit anschließender Freigabe und optischer Rückmeldung oder Unterdrückung des Rangiermodus.

Wird in den beschriebenen Ausführungsformen der Rangiermodus nicht freigegeben, so kann ergänzend dieser Zustand beispielsweise sowohl über einen entsprechenden Farbwechsel der Anzeige 22 und/oder eine akustische Signalausgabeeinrichtung 24 dem Fahrer angezeigt werden.

### Bezugszeichen

- 2: Kraftfahrzeug
- 4: Antriebsmaschine
- 6: Kupplung
- 8: Automatgetriebe
- 10: Antriebsachse
- 12: Fahrpedal
- 14: Getriebewählhebel
- 16: Steuereinrichtung
- 18: Getriebestelleinrichtung
- 20: Taster, Betätigungselement
- 22: Anzeige
- 24: Signalausgabeeinrichtung
- 26: Kupplungsstellvorrichtung

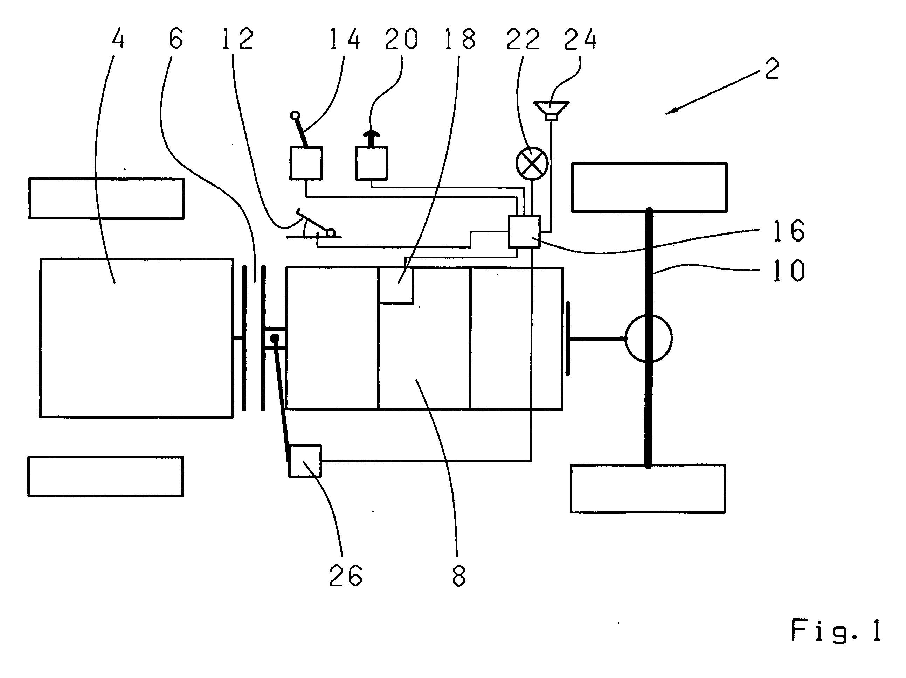

## Patentansprüche

1. Verfahren zum Aktivieren eines Rangiermodus eines Kraftfahrzeuges (2), mit einem Automatgetriebe (8), einer automatisierten Kupplung (6), einem Fahrpedal (12), einem Betätigungselement zur Aktivierung eines Rangiermodus, einem Getriebewählhebel (14) zur Auswahl des Getriebefahrbereiches bzw. der Gangstufen und mit einer Steuereinrichtung (16), wobei die Aktivierung des Rangiermodus durch Betätigung eines Betätigungselementes (20) derart erfolgt, dass dieses nach dessen Betätigung in seine ursprüngliche Lage zurückkehrt und das Aktivieren des Rangiermodus dem Fahrer rückgemeldet wird, **dadurch gekennzeichnet, dass** ein als das Betätigungselement ausgebildeter Getriebewählhebel (14) verwendet wird, mit dem zum Aktivieren des Rangiermodus bei eingelegtem niedrigsten Fahrgang (Vorwärtsgang oder Rückwärtsgang) dieser niedrigste Fahrgang nochmals angewählt wird.

2. Verfahren nach Anspruch 1, **dadurch gekennzeichnet, dass** die zuvor gewählte Getriebeübersetzung durch eine Aktivierung des Rangiermodus automatisch so angepasst wird, dass das Fahrzeug fahrsituationsgerecht rangiert werden kann.

3. Verfahren nach Anspruch 1 oder 2, **dadurch gekennzeichnet, dass** die Steuereinrichtung (16) das Aktivieren des Rangiermodus in Abhängigkeit von Zustandsdaten des Fahrzeugs und/oder dessen Umgebung unter drückt, beispielsweise wenn die aktuelle Kupplungslast bzw. Kupplungstemperatur und/oder Fahrgeschwindigkeit vorgegebene Grenzwerte überschreiten.

4. Verfahren nach wenigstens einem der vorherigen Ansprüche, **dadurch gekennzeichnet, dass** ein Wechsel der Fahrtrichtung, signalisiert durch einen Wechsel der Stellung des Getriebewählhebels (Vorwärtsfahrstellung /Rückwärtsfahrstellung), den Rangiermodus nicht beendet.

5. Verfahren nach wenigstens einem der vorherigen Ansprüche, **dadurch gekennzeichnet, dass** ein Wechsel des Getriebegangs bei gleicher Fahrtrichtung, signalisiert durch eine Betätigung des Getriebewählhebels (14), den Rangiermodus nicht beendet.

6. Verfahren nach wenigstens einem der vorherigen Ansprüche, **dadurch gekennzeichnet, dass** ein Wechsel in einen dem Rangiermodus nicht zugeordneten Gang den Rangiermodus nicht beendet.

7. Verfahren nach wenigstens einem der vorherigen Ansprüche, **dadurch gekennzeichnet, dass** der Rangiermodus angefordert werden kann, wenn sich das Automatgetriebes (8) in seiner Neutral-Stellung befindet.

8. Verfahren nach Anspruch 7, **dadurch gekennzeichnet, dass** der Rangiermode in der Neutral-Stellung des Automatgetriebes (8) nicht aufgehoben wird, oder nach Ablauf eines vorbestimmten Zeitraumes aufgehoben wird.

## Claims

1. Method for activating a manoeuvring mode of a motor vehicle (2), having an automatic transmission (8), an automated clutch (6), an accelerator pedal (12), an activation element for activating a manoeuvring mode, a transmission selector lever (14) for selecting the transmission driving mode or the gear ratios and having a control device (16), wherein the manoeuvring mode is activated by actuating an actuation element (20) in such a way that after said actuation element is actuated it returns to its original position and reports the activation of the manoeuvring mode to the driver, **characterized in that** a transmission selector lever (14), which is embodied as the actuation element, is used, with which transmission selector lever (14) the lowest drive gear is selected once more in order to activate the manoeuvring mode with said lowest drive gear (forward gear or reverse gear) engaged.

2. Method according to Claim 1, **characterized in that** the previously selected transmission ratio is automatically adapted by activation of the manoeuvring mode in such a way that the vehicle can be manoeuvred in a way which is appropriate for the driving situation.

3. Method according to Claim 1 or 2, **characterized in that** the control device (16) suppresses the activation of the manoeuvring mode as a function of status data of the vehicle and/or the surroundings thereof, for example if the current clutch load or clutch temperature and/or driving speed exceed predefined limiting values.

4. Method according to at least one of the preceding claims, **characterized in that** a change of the direction of travel, signalled by a change of the position of the transmission selector lever (forward driving position/reverse driving position), does not end the manoeuvring mode.

5. Method according to at least one of the preceding claims, **characterized in that** a change of the transmission gear when the direction of travel is the same, signalled by actuation of the transmission selector lever (14), does not end the manoeuvring mode.

6. Method according to at least one of the preceding claims, **characterized in that** a change into a gear which is not assigned to the manoeuvring mode does not end the manoeuvring mode.

7. Method according to at least one of the preceding claims, **characterized in that** the manoeuvring mode can be requested if the automatic transmission (8) is in its neutral position.

8. Method according to Claim 7, **characterized in that** the manoeuvring mode is not cancelled in the neutral position of the automatic transmission (8), or is cancelled after expiry of a predetermined time period.

## Revendications

1. Procédé pour activer un mode manoeuvre d'un véhicule automobile (2), comprenant une transmission automatique (8), un embrayage automatique (6), une pédale d'accélération (12), un élément d'actionnement pour activer un mode manoeuvre, un levier de sélection de transmission (14) pour la sélection de la plage de conduite de la transmission ou des rapports de vitesse et un dispositif de commande (16), l'activation du mode manoeuvre s'effectuant par l'actionnement d'un élément d'actionnement (20) de telle sorte que celui-ci, après son actionnement, revienne dans sa position initiale et que l'activation du mode de manoeuvre soit communiquée en retour au conducteur, **caractérisé en ce que** l'on utilise un levier de sélection de transmission (14) réalisé sous la forme d'un élément d'actionnement, avec lequel, pour l'activation du mode manoeuvre lorsque le rapport de conduite le plus bas est enclenché (rapport de marche avant ou rapport de marche arrière), ce rapport de conduite le plus bas est encore une fois sélectionné.

2. Procédé selon la revendication 1, **caractérisé en ce que** la démultiplication de transmission sélectionnée préalablement est adaptée automatiquement par une activation du mode manoeuvre de telle sorte que le véhicule puisse être manoeuvré de manière adaptée à la situation de conduite.

3. Procédé selon la revendication 1 ou 2, **caractérisé en ce que** le dispositif de commande (16) supprime l'activation du mode manoeuvre en fonction de données d'état du véhicule et/ou de son environnement, par exemple lorsque la charge d'embrayage actuelle ou la température de l'embrayage et/ou la vitesse de conduite dépassent des valeurs limites prédéfinies.

4. Procédé selon au moins l'une quelconque des revendications précédentes, **caractérisé en ce qu'**un changement de direction de conduite, signalé par un changement de position du levier de sélection de transmission (position de marche avant ou position de marche arrière), ne termine pas le mode manoeuvre.

5. Procédé selon au moins l'une quelconque des revendications précédentes, **caractérisé en ce qu'**un changement de rapport de transmission tout en conservant la direction de conduite, signalé par un actionnement du levier de sélection de transmission (14), ne termine pas le mode manoeuvre.

6. Procédé selon au moins l'une quelconque des revendications précédentes, **caractérisé en ce qu'**un changement à un rapport non associé au mode manoeuvre ne termine pas le mode manoeuvre.

7. Procédé selon au moins l'une quelconque des revendications précédentes, **caractérisé en ce que** le mode manoeuvre peut être demandé lorsque la transmission automatique (8) se trouve dans sa position neutre.

8. Procédé selon la revendication 7, **caractérisé en ce que** le mode manoeuvre n'est pas supprimé dans la position neutre de la transmission automatique (8), ou est supprimé à la fin d'un intervalle de temps prédéterminé.
